# FASCICULE DE BREVET EUROPEEN

(11) **EP 2 440 817 B1**
(45) Date de publication et mention de la délivrance du brevet: **22.08.2018**
(21) Numéro de dépôt: 10734213.1
(22) Date de dépôt: 02.06.2010
(51) Int. Cl.: F16J 15/44, G01N 27/90, F01D 5/00, F01D 11/02, F01D 21/00, F01D 25/28

(54) **CONTROLE NON DESTRUCTIF D'UNE LECHETTE D'ETANCHEITE.**
ZERSTÖRUNGSFREIER TEST EINES DICHTUNGSELEMENTS
NONDESTRUCTIVE TEST OF A SEALING MEMBER

(30) Priorité: 10.06.2009 FR 0953839
(43) Date de publication de la demande: 18.04.2012
(73) Titulaire: Safran Aircraft Engines, 75015 Paris (FR)
(72) Inventeur: BOUSQUET, Sadia, F-77550 Moissy Cramayel (FR); DERRIEN, Gérard, F-78800 Houilles (FR); GARCIA-LOPEZ, Carolina, F-78280 Guyancourt (FR); NEDELEC, Jean-Jacques, F-78320 Le Mesnil Saint Denis (FR)
(74) Mandataire: Intès, Didier Gérard André
(86) Numéro de dépôt international: PCT/FR2010/051077
(87) Numéro de publication internationale: WO 2010/142887

(56) Documents cités:
- EP-A- 1 605 259
- EP-A- 1 780 538
- WO-A-2006/101586

## Description

L'invention concerne le contrôle non destructif d'une léchette d'étanchéité annulaire s'étendant à la surface d'un tambour de roue aubagée d'une turbomachine. Elle concerne plus particulièrement le contrôle par courants de Foucault des arêtes des léchettes s'étendant généralement par groupes de plusieurs, chaque groupe étant situé entre les disques constituant un tel tambour.

Dans un turboréacteur d'avion, une turbomachine telle qu'un compresseur comporte un tambour de roue aubagée, monté rotatif autour de son axe principal. Ce tambour, souvent dénommé "spool", porte toutes les aubes rotoriques. Chaque étage du compresseur comporte une couronne d'aubes mobiles régulièrement réparties à la périphérie d'un disque. L'assemblage des disques forme le tambour précité.

Entre les couronnes d'aubes mobiles sont disposées des couronnes d'aubes statoriques. L'étanchéité entre deux étages successifs est obtenue par la coopération d'un anneau de matériau abradable, porté par les aubes fixes et de léchettes solidaires dudit tambour. Les léchettes sont des sortes de nervures annulaires acérées. Entre deux étages successifs, l'étanchéité est généralement assurée par plusieurs léchettes parallèles (typiquement entre deux et quatre).

Pour limiter dans le temps l'usure des léchettes, on y dépose un matériau résistant, par un procédé plasma. Ce dépôt plasma doit faire l'objet d'un contrôle non destructif pour identifier tout défaut du type "crique". Le moyen de contrôle non destructif le plus couramment utilisé est un contrôle par courants de Foucault. Ce type de contrôle est jusqu'à présent pratiqué à l'aide d'une sonde (bobine haute fréquence) dont une extrémité est déplacée le long de l'arête de la léchette à contrôler, en restant directement au contact de celle-ci.

Le dépôt plasma implique une certaine rugosité de la léchette ce qui entraîne une usure rapide de la sonde.

On a cherché à remédier à ce problème en recouvrant la léchette ainsi que l'extrémité de la sonde, d'un film de polytétrafluoroéthylène, pour obtenir une protection de la sonde, une bonne efficacité du contrôle par courants de Foucault et un faible frottement pendant le déplacement entre la sonde et la léchette. Cette solution requiert un temps de préparation très important, notamment pour le dépôt du film sur chaque léchette. Ces opérations nécessitent plusieurs heures auxquelles il faut ajouter le coût du film de polytétrafluoroéthylène.

L'invention permet de résoudre tous ces problèmes en privilégiant un contrôle non destructif sans contact avec la sonde donc sans usure de celle-ci et sans utilisation de polytétrafluoroéthylène.

Par ailleurs, EP 1 780 538 décrit un support triangulaire pour l'inspection d'une surface ; il ne concerne pas le contrôle des léchettes.

Plus particulièrement, l'invention concerne un dispositif de contrôle pour une léchette d'étanchéité annulaire faisant partie d'une structure d'étanchéité s'étendant à la surface d'un tambour de roue aubagée, caractérisé en ce qu'il comprend un chariot comportant au moins deux galets de guidage espacés, aptes à entrer en contact avec au moins une partie de ladite structure d'étanchéité formant rail circulaire et en ce que ledit chariot porte au moins une sonde située à un emplacement tel qu'elle se trouve positionnée en regard et à distance prédéterminée d'une arête de ladite léchette à contrôler lorsque lesdits galets sont en engagement avec ledit rail circulaire.

Le fait d'utiliser les léchettes comme référence de roulement du chariot permet de garantir une distance bien constante entre la sonde et la partie à contrôler, condition d'un bon contrôle, notamment s'il s'agit d'un contrôle par courant de Foucault.

Dans la définition qui précède, la structure d'étanchéité mentionnée désigne au moins une et très généralement un groupe de léchettes rapprochées et décalées axialement à la surface dudit tambour, entre deux disques adjacents. C'est l'ensemble de cette structure d'étanchéité qui forme ledit rail circulaire. Autrement dit, un galet précité peut avoir une gorge en V renversé par laquelle il s'engage sur le sommet d'une léchette ou bien un profil convexe engagé entre deux léchettes adjacentes.

L'invention sera mieux comprise et d'autres avantages de celle-ci apparaîtront plus clairement à la lumière de la description qui va suivre d'un dispositif de contrôle conforme à son principe, donnée uniquement à titre d'exemples et faite en référence aux dessins annexés, dans lesquels :
- la figure 1 est une vue générale schématique d'un dispositif de contrôle selon l'invention, avec positionnement automatique programmé de la sonde ;
- la figure 2 est une vue schématique d'un chariot portant une telle sonde pour une exploration manuelle ;
- la figure 3 est un schéma illustrant le contrôle d'une léchette avec le chariot de la figure 2 ;
- la figure 4 est une coupe IV-IV de la figure 3 ;
- la figure 5 est une coupe V-V de la figure 3 ; et
- la figure 6 est une vue en coupe, semblable à celle de la figure 5, illustrant une variante du chariot permettant de contrôler simultanément toutes les léchettes d'une même structure d'étanchéité.

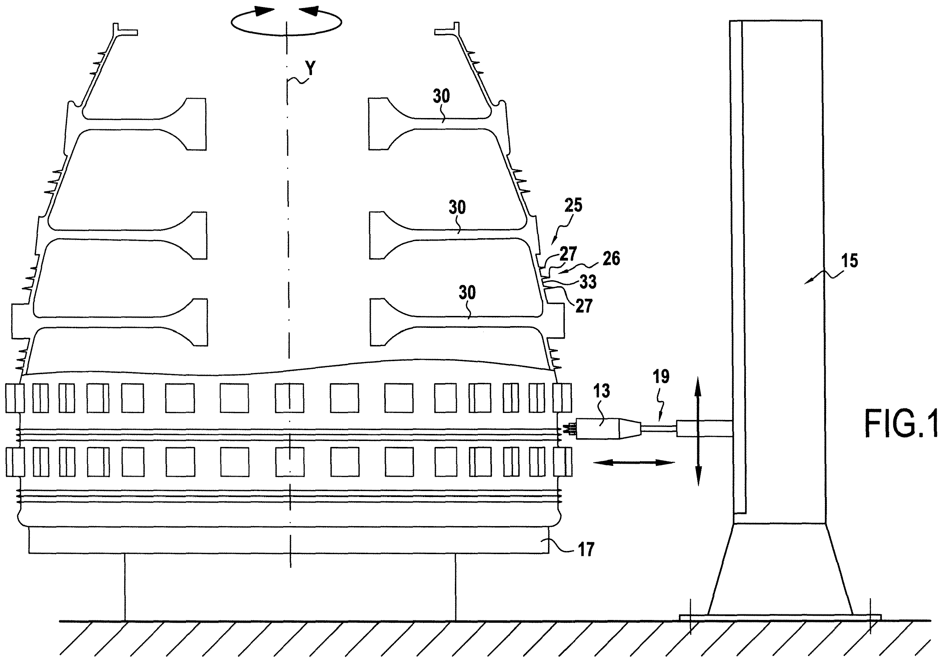

Le dispositif de contrôle illustré à la figure 1, dans une version automatisée, comprend un chariot 11 portant au moins une sonde à courants de Foucault 13, un robot 15 portant ce chariot et un plateau 17 monté tournant autour d'un axe de rotation Y ici, un axe vertical. Le robot 15 est muni d'un bras télescopique 19 et le chariot 11 est monté à l'extrémité de ce bras. Le bras 19, horizontal, est lui-même mobile verticalement. Le robot est programmé pour régler la position du chariot par rapport au plateau, pour le contrôle des différentes léchettes d'un tambour 25 placé sur le plateau.

Dans l'exemple, un tel tambour 25 est placé sur le plateau et positionné de sorte que son axe principal de symétrie soit confondu avec l'axe de rotation Y, vertical, du plateau 17. Comme représenté, le tambour de roue aubagée 25 placé sur le plateau est constitué de disques adjacents 30 soudés les uns à côté des autres. Entre deux disques consécutifs, le tambour comporte une structure d'étanchéité 26 composée de plusieurs léchettes 27. Chaque léchette a la forme d'une nervure acérée. Le robot 15, placé près du plateau est tel que le chariot puisse être amené en regard de chaque groupe de léchettes 27 (ci-dessus dénommé structure d'étanchéité). Le même réglage d'altitude du chariot permet de contrôler successivement (ou simultanément si le chariot comporte plusieurs sondes) toutes les léchettes 27 d'une même structure d'étanchéité 26.

Les léchettes 27 d'une même structure d'étanchéité sont disposées côte à côte et espacées d'une faible distance axiale en sorte qu'elles définissent entre elles des rainures 33. Ainsi, les léchettes comme les rainures peuvent servir de référence de guidage pour le chariot 11.

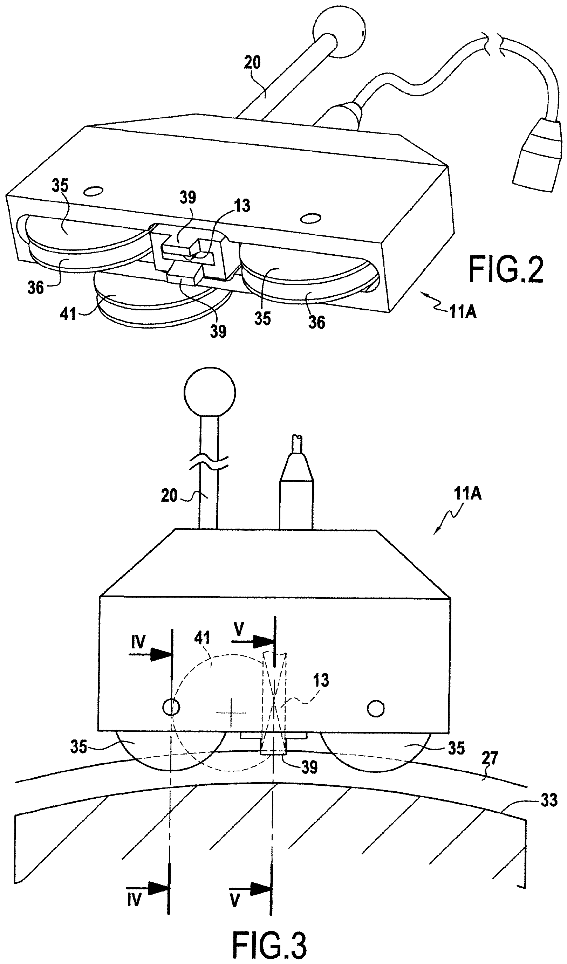

Le chariot 11A illustré aux figures 2 à 5 est plus particulièrement adapté pour un contrôle manuel. C'est pourquoi la tige 19 est remplacée par une poignée 20. Pour l'essentiel cependant, le chariot 11A est semblable au chariot 11.

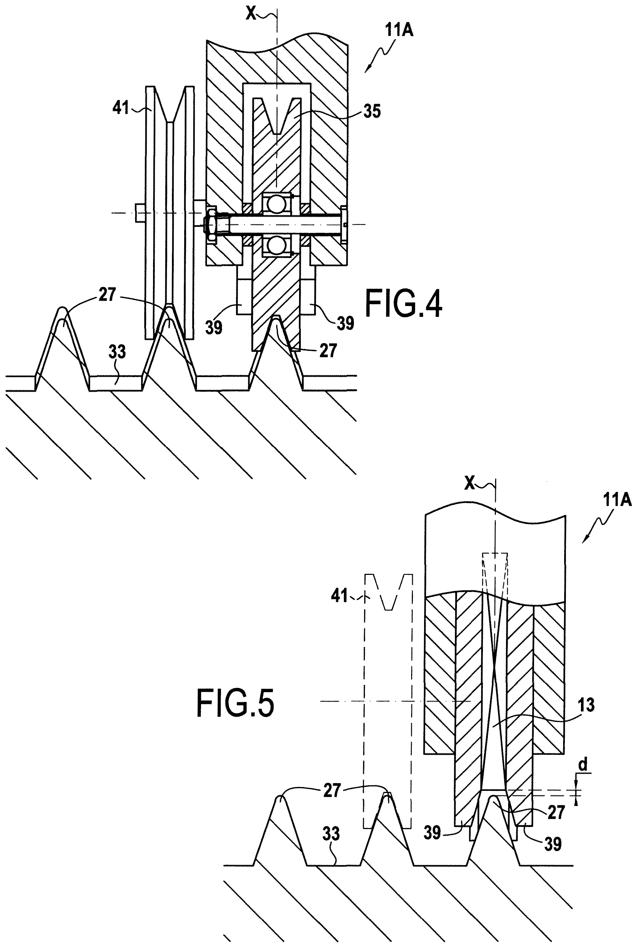

Plus précisément, le chariot 11A comporte au moins deux galets de guidage 35 espacés, aptes à entrer en contact avec au moins une partie de ladite structure d'étanchéité 26 formant globalement un rail circulaire. Dans l'exemple, les deux galets de guidage 35 sont situés dans un même plan. Selon l'exemple, ces galets sont du type à gorge 36 et ils sont prévus pour entrer en contact avec l'arête circulaire d'une léchette. La sonde 13 est constituée d'une bobine présentant un axe X (l'axe des spires) destiné à être maintenu sensiblement perpendiculairement à la partie à contrôler. La sonde 13, plus particulièrement une extrémité de celle-ci est située à un emplacement tel qu'elle se trouve positionnée en regard d'une arête de la léchette 27 à contrôler lorsque les galets 35 sont en engagement avec ledit rail circulaire. Dans l'exemple, la léchette à contrôler est celle sur laquelle les galets 35 sont engagés. L'axe X de la sonde et les fonds de gorge des galets 35 sont donc sensiblement dans le même plan. La sonde 13 est située entre les deux galets. La figure 4 illustre l'engagement d'un galet 35 sur la léchette 27 qui le guide. La figure 5 illustre la position de la sonde 13 (la bobine) par rapport à l'arête de la léchette 27 à contrôler. Lorsque les galets 35 sont en engagement avec la léchette 27, on constate que l'extrémité de la sonde la plus proche de la léchette n'est pas en contact avec celle-ci mais est maintenue à une distance prédéterminée d, faible, de l'arête de ladite léchette à contrôler. Pendant tout le déplacement du chariot 11A le long de la léchette, cette distance reste constante, ce qui constitue une des conditions requises pour un bon contrôle. De plus, on note que le chariot comporte des flancs latéraux 39 s'étendant de part et d'autre de l'extrémité de la sonde qui est apte à venir en regard de la léchette à contrôler. Ces flancs latéraux sont utiles dans le cas d'un contrôle manuel, c'est-à-dire n'utilisant pas le robot. Il suffit que l'opérateur engage les galets sur la léchette à contrôler et déplace le chariot tout autour du tambour. Dans ce cas, les flancs latéraux 39 permettent à l'opérateur de contrôler l'orientation de la sonde par rapport à la léchette.

En outre, le chariot 11A comporte au moins un galet de guidage supplémentaire 41 situé dans un plan parallèle à celui qui contient les deux autres. Ce galet de guidage supplémentaire est apte à entrer en contact avec le rail circulaire, par exemple avec une léchette 27 adjacente (ou avec une gorge 33 définie entre deux léchettes). Ce galet de guidage supplémentaire contribue aussi à stabiliser l'orientation de la sonde par rapport à la léchette à contrôler.

Dans le mode de réalisation automatisé de la figure 1, les flancs latéraux 39 et le galet supplémentaire 41 ne sont pas nécessaires.

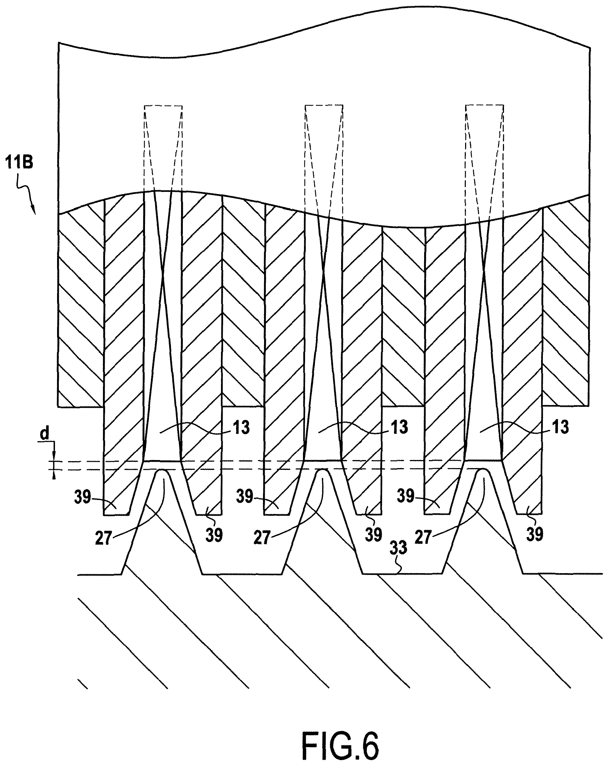

Sur la variante de la figure 6, le chariot 11B porte plusieurs sondes 13 espacées en sorte que chacune d'entre elles se trouve positionnée en regard et à distance prédéterminée d d'une arête de léchette 27 correspondante d'une même structure d'étanchéité. De cette façon, toutes les léchettes d'un même groupe peuvent être contrôlées simultanément.

Par exemple, dans la version automatique de la figure 1, le robot est programmé pour amener le chariot 11B à une altitude correspondant à la position d'un groupe de léchettes et, si le chariot porte un nombre de sondes 13 correspondant au nombre de léchettes 27 de ce groupe, lesdites sondes étant espacées de la même distance que les léchettes sont espacées les unes des autres, toutes les léchettes d'un même groupe (une même structure d'étanchéité) peuvent être contrôlées en même temps, en un seul tour de plateau 17.

Suivant les étages, les léchettes peuvent être écartées de distances différentes. On peut disposer de chariots comportant des sondes espacées différemment. En variante, le chariot peut comporter des moyens de réglage de l'écartement entre lesdites sondes.

## Revendications

1. Dispositif de contrôle pour une léchette d'étanchéité (27) annulaire faisant partie d'une structure d'étanchéité (26) s'étendant à la surface d'un tambour de roue aubagée, **caractérisé en ce qu'**il comprend un chariot (11, 11A, 11B) comportant au moins deux galets de guidage (36) espacés, aptes à entrer en contact avec au moins une partie de ladite structure d'étanchéité (26) formant rail circulaire et **en ce que** ledit chariot porte au moins une sonde (13) située à un emplacement tel qu'elle se trouve positionnée en regard et à distance (d) prédéterminée d'une arête de ladite léchette à contrôler lorsque lesdits galets sont en engagement avec ledit rail circulaire.

2. Dispositif selon la revendication 1, **caractérisé en ce que** les galets (36) sont du type à gorge et **en ce qu'**un axe de ladite sonde (13) et les fonds de gorge desdits galets sont sensiblement coplanaires, ladite sonde étant située entre les deux galets.

3. Dispositif selon la revendication 1 ou 2, **caractérisé en ce que** ledit chariot comporte des flancs latéraux (39) s'étendant de part et d'autre d'une extrémité de la sonde apte à venir en regard de la léchette à contrôler.

4. Dispositif selon la revendication 2 ou 3, **caractérisé en ce que** ledit chariot comporte au moins un galet de guidage supplémentaire (41) situé dans un plan parallèle à celui qui contient les deux autres et apte à entrer en contact avec ledit rail circulaire de façon à stabiliser l'orientation de ladite sonde (13) par rapport à la léchette à contrôler.

5. Dispositif selon l'une des revendications précédentes, **caractérisé en ce que** ledit chariot (11B) comprend plusieurs sondes (13) espacées en sorte que chacune se trouve positionnée en regard et à distance prédéterminée d'une arête de léchette correspondante, pendant le contrôle.

6. Dispositif selon la revendication 5, **caractérisé en ce que** ledit chariot comporte des moyens de réglage de l'écartement entre lesdites sondes.

7. Dispositif selon l'une des revendications précédentes, **caractérisé en ce qu'**il comporte en outre un plateau (17) tournant autour d'un axe de rotation, apte à recevoir ledit tambour, ce dernier étant positionné de sorte que son axe principal de symétrie soit confondu avec ledit axe de rotation (Y) du plateau.

8. Dispositif selon la revendication 7, **caractérisé en ce qu'**il comporte en outre un robot (15) muni d'un bras (19) et **en ce que** ledit chariot est monté à l'extrémité dudit bras, ledit robot étant programmé pour régler la position dudit chariot par rapport au plateau pour le contrôle de léchettes différentes dudit tambour.

9. Dispositif selon l'une des revendications précédentes, **caractérisé en ce que** la ou chaque sonde précitée est une sonde à courants de Foucault.

## Patentansprüche

1. Vorrichtung zum Testen eines ringförmigen Dichtungselements (27), das Teil einer Dichtungsanordnung (26) ist, die sich auf der Oberfläche einer Trommel eines beschaufelten Rads erstreckt, **dadurch gekennzeichnet, dass** sie einen Schlitten (11, 11A, 11B) umfasst, der mindestens zwei beabstandete Führungsrollen (36) umfasst, die eingerichtet sind, um mit mindestens einem Teil der Dichtungsanordnung (26), die eine kreisförmige Schiene bildet, in Kontakt zu kommen, und dadurch, dass der Schlitten mindestens eine Sonde (13) trägt, die an einer Stelle liegt, an der sie sich gegenüber und in einem vorbestimmten Abstand (d) von einem Grat des zu testenden Elements angeordnet befindet, wenn die Rollen mit der kreisförmigen Schiene in Eingriff sind.

2. Vorrichtung nach Anspruch 1, **dadurch gekennzeichnet, dass** die Rollen (36) Nuten aufweisen und dadurch, dass eine Achse der Sonde (13) und die Nutengründe der Rollen im Wesentlichen koplanar sind, wobei die Sonde zwischen den beiden Rollen liegt.

3. Vorrichtung nach Anspruch 1 oder 2, **dadurch gekennzeichnet, dass** der Schlitten Seitenflächen (39) umfasst, die sich auf beiden Seiten eines Endes der Sonde erstrecken, die eingerichtet sind, um mit dem zu testenden Element in Kontakt zu kommen.

4. Vorrichtung nach Anspruch 2 oder 3, **dadurch gekennzeichnet, dass** der Schlitten mindestens eine zusätzliche Führungsrolle (41) umfasst, die in einer Ebene angeordnet ist, die parallel zu der ist, die die beiden anderen enthält und eingerichtet ist, um mit der kreisförmigen Schiene in Kontakt zu kommen, um die Ausrichtung der Sonde (13) in Bezug auf das zu testende Element zu stabilisieren.

5. Vorrichtung nach einem der vorhergehenden Ansprüche, **dadurch gekennzeichnet, dass** der Schlitten (11B) mehrere Sonden (13) umfasst, die derart beabstandet sind, dass sich jede während des Tests gegenüber und in einem vorbestimmten Abstand von einem Grat des entsprechenden Elements angeordnet befindet.

6. Vorrichtung nach Anspruch 5, **dadurch gekennzeichnet, dass** der Schlitten Einrichtungen zum Einstellen des Abstands zwischen den Sonden umfasst.

7. Vorrichtung nach einem der vorhergehenden Ansprüche, **dadurch gekennzeichnet, dass** sie ferner eine Platte (17) umfasst, die sich um eine Drehachse dreht, die eingerichtet ist, um die Trommel aufzunehmen, wobei dieses derart angeordnet ist, dass ihre Hauptsymmetrieachse mit der Drehachse (Y) der Platte zusammenfällt.

8. Vorrichtung nach Anspruch 7, **dadurch gekennzeichnet, dass** sie ferner einen Roboter (15) umfasst, der mit einem Arm (19) versehen ist, und dadurch, dass der Schlitten am Ende des Arm angebracht ist, wobei der Roboter programmiert ist, um die Position des Schlittens in Bezug auf die Platte zum Testen der verschiedenen Elemente der Trommel einzustellen.

9. Vorrichtung nach einem der vorhergehenden Ansprüche, **dadurch gekennzeichnet, dass** die oder jede vorgenannte Sonde eine Wirbelstromsonde ist.

## Claims

1. An inspecting device for an annular sealing wiper (27) forming part of a sealing structure (26) extending at the surface of a bladed-wheel drum, the device being **characterized in that** it comprises a carriage (11, 11A, 11B) having at least two spaced-apart guide wheels (36) suitable for coming into contact with at least a portion of said sealing structure (26) that forms a circular rail, and **in that** said carriage carries at least one probe (13) situated at a location such that, when said wheels are in engagement with said circular rail, the probe is to be found positioned facing an edge of said wiper for inspection and at a determined distance (d) therefrom.

2. A device according to claim 1, **characterized in that** the wheels (36) are of the grooved type, and **in that** an axis of said probe (13) and the bottoms of the grooves of said wheels are substantially coplanar, said probe being situated between the two wheels.

3. A device according to claim 1 or claim 2, **characterized in that** said carriage has lateral flanks (39) extending on either side of an end of the probe that is suitable for facing the wiper for inspection.

4. A device according to claim 2 or claim 3, **characterized in that** said carriage includes at least one additional guide wheel (41) situated in a plane parallel to the plane containing the other two and suitable for coming into contact with said circular rail so as to stabilize the orientation of said probe (13) relative to the wiper for inspection.

5. A device according to any one of the preceding claims, **characterized in that** said carriage (11B) has a plurality of probes (13) that are spaced apart in such a manner that each of them is positioned facing and at a predetermined distance from a corresponding wiper edge during inspection.

6. A device according to claim 5, **characterized in that** said carriage includes means for adjusting the spacing between said probes.

7. A device according to any one of the preceding claims, **characterized in that** it further includes a turntable (17) for rotating about an axis of rotation and suitable for receiving said drum, the drum being positioned in such a manner that its main axis of symmetry coincides with said axis of rotation (Y) of the turntable.

8. A device according to claim 7, **characterized in that** it also includes a robot (15) having an arm (19), and **in that** said carriage is mounted at the end of said arm, said robot being programmed to adjust the position of said carriage relative to the turntable in order to inspect the various wipers of said drum.

9. A device according to any one of the preceding claims, **characterized in that** the or each above-mentioned probe is an eddy current probe.
